# EUROPÄISCHE PATENTSCHRIFT

(11) **EP 3 172 447 B1**
(45) Veröffentlichungstag und Bekanntmachung des Hinweises auf die Patenterteilung: **08.01.2020**
(21) Anmeldenummer: 15741170.3
(22) Anmeldetag: 21.07.2015
(51) Int. Cl.: F04D 27/00, F04D 29/02, F04D 29/38

(54) **SCHAUFEL FÜR EIN LAUFRAD**
BLADE FOR AN IMPELLER
AUBE DE ROTOR

(30) Priorität: 23.07.2014 DE 102014214460; 15.08.2014 DE 102014216266
(43) Veröffentlichungstag der Anmeldung: 31.05.2017
(73) Patentinhaber: ebm-papst Mulfingen GmbH & Co. KG, 74673 Mulfingen (DE)
(72) Erfinder: ECCARIUS, Michael, 74673 Mulfingen (DE); STRENG, Gunter, 74575 Schrozberg (DE)
(74) Vertreter: Jostarndt Patentanwalts-AG
(86) Internationale Anmeldenummer: PCT/EP2015/066661
(87) Internationale Veröffentlichungsnummer: WO 2016/012456

(56) Entgegenhaltungen:
- EP-A1- 1 681 439
- DE-A1- 3 802 139
- DE-A1- 19 641 099
- JP-A- 2004 011 423
- US-A- 3 827 826
- US-A- 4 187 055

## Beschreibung

Die vorliegende Erfindung betrifft Schaufeln von angetriebenen Strömungsmaschinen, wie beispielsweise Lüfter oder auch Ventilatoren.

Strömungsmaschinen dienen zum Transportieren von Fluiden, wie z.B. Luft. Das Fluid wird je nach angestrebter Wirkung mehr oder weniger stark geführt und/oder konditioniert wird. Die Bewegung des Fluidstroms bzw. Luftstroms wird über Schaufeln beeinflusst, wobei diese regelmäßig in Gruppe an einer drehbaren Basis, auch als Nabe bezeichnet, befestigt sind. Die Drehbewegung der rotierenden Nabe beeinflusst über die abweichend von der Bewegungsrichtung ausgerichtete Fläche einer jeweiligen Schaufel das gezielte Führen und Leiten eines Fluidstroms. Hierbei kann die Basis als zentrale Nabe, Rad oder auch als umschließender Ring ausgebildet sein, mit der die Schaufeln verbindbar bzw. verbunden sind. Durch diese Verbindung stehen die Schaufeln mit der Nabe in Wirkverbindung. Durch Drehung der Nabe werden die Schaufeln angetrieben. Die Schaufeln erstrecken sich in radialer Richtung von der Nabe. Klassischer Weise wird ein gewünschter Fluidstrom, insbesondere Luftstrom, durch das Design der Schaufelgeometrie gesteuert. So hat z.B. der Anstellwinkel der Schaufel Einfluss auf die Strömung. Auch kann es vorgesehen sein, dass die Schaufel verwunden ausgebildet ist. Bei einer verwundenen Schaufel variiert der Anstellwinkel über der radialen Erstreckung der Schaufel.

Mit steigender Rotationsgeschwindigkeit beziehungsweise Drehzahl nehmen auf die Schaufel wirkende Kräfte zu: Fliehkräfte, Reibung, Vibrationen und Strömungswiderstände steigen an. Damit geht eine Veränderung der erzielten Strömungsbewegung einher. Im Stand der Technik finden sich mehrere, etablierte Maßnahmen, um diesen wirkenden Kräften zu begegnen bzw. die wirkenden Kräfte zu nutzen.

Aus der englischen Offenlegungsschrift GB 724,073 A ist bekannt, jeweils mehrere Schaufeln als eng aneinander angrenzende, separate Hohlprofile anzuordnen, um so eine mehrteilige Leitfläche mit Kühl-Fugen bereitzustellen. Durch verbundene Abdeckbleche im Wurzelbereich der zusammengesetzten Leitflächen werden diese auf der Basis fixiert. Mit Wurzelbereich ist der nabennah angeordnete Bereich der Schaufel gemeint. In die Basis erstreckte, formschlüssig an der mehrteiligen Leitfläche anliegende Randbereiche stabilisieren die Leitfläche an der so mehrlagig verdickten Wurzelbasis gegen zentrifugale Spannungen und Deformationen.

Aus der deutschen Patentschrift DE 1 946 086 C2 ist bekannt, eine aus mehreren, verbundenen, elastischen und auch starren Abschnitten zusammengesetzte Schaufel im elastischen Bereich über hydraulische Balge zu deformieren. Gelenk-Abschnitte erlauben über die Balge und mechanische Rückstellmittel ein Anpassen einer Schaufelwölbung an Betriebsbedingungen. Konvexe und/oder konkave Flanken eines stromlinienförmigen Profilabschnitts können so in ihrer Wölbung oder in ihrem Strömungswiderstand gesteuert und/oder geregelt werden.

Die japanische Offenlegungsschrift JP-S-581 950 01 A offenbart ergänzend hierzu, wie ein pneumatischer Regelkreis unter Einbeziehung von zuflussseitigem und abflussseitigem Druck eine Regelung einer mechanischen Steuereinrichtung in solch einer Luftbewegungsvorrichtung bereitstellen kann.

Aus der deutschen Patentschrift DE 22 03 353 B2 ist bekannt, einstückige Schaufeln aus elastischem Material im Bereich einer neutralen Faser verdickt auszubilden. Der Anstellwinkel der elastischen, zuflussseitigen und abflussseitigen Kanten unterliegt dann bei höheren Drehzahlen in Abhängigkeit der Masseverteilung, der Drehzahl und des Gesamtdruckes einer elastischen Deformation, wodurch Leistungsbedarf und Geräuschentwicklung in einem gewünschten Bereich gehalten werden können.

Die deutsche Patentschrift DE 30 14872 C2 lehrt ergänzend hierzu, wie durch gezielte Profilverdickung in einigen Abschnitten - hier im Randbereich - und/oder zusätzliche Gewichte bei Kunststoff-Schaufeln die Deformation gezielt gesteuert und eine Bruchgefahr verringert werden kann.

Die japanische Offenlegungsschrift JP S 622 277 33 A offenbart eine schichtweise aufgebaute, faserverstärkte Schaufel, welche durch eine flächige, faserverstärkte Zwischenschicht mit umschließender Klebeschicht eine besonders stabile Verbindung zwischen Ober- und Unterseite einer Schaufel bereitstellt.

Ergänzend dazu lehrt die japanische Offenlegungsschrift JP H 058 70 95 A, wie durch außenseitiges, lokales Stabilisieren mit Verstärkungs-Fasern und/oder - Geweben eine thermische Expansion einer Schaufel in Abhängigkeit der Betriebstemperatur so eingestellt werden kann, dass das Fördervolumen proportional zur Temperatur auf einen für eine Kühlung vorteilhaft angepassten Bereich eingestellt werden kann.

Aus der US-amerikanischen Offenlegungsschrift US 5,403,153 A ist bekannt, in einer Schaufel aus verschiedenen Komposit-Werkstoffen und/oder Werkstoffen Hohlräume, Verstärkungsfasern und Kernstrukturen so zu kombinieren, dass eine verbesserte, thermische Leitfähigkeit und gleichmäßigere Temperatur bei geringerem Gewicht erreicht wird. Hierbei können Hohlräume durch Fasern in ihrer Form und/oder Innenfläche stabilisiert und/oder durch geschäumte Strukturen ausgefüllt sein und/oder während der Herstellung durch nachfolgend entfernbare Schäume oder Körper vorgegeben sein.

Die US-amerikanische Patentanmeldung US 4 187 055 A offenbart ein flexibles Gebläse, das die Schaufelsteigung als Reaktion auf erhöhte Drehzahl automatisch reduziert, wobei das flexible Gebläse eine Nabe mit einer Drehachse und eine Vielzahl von sich radial nach außen erstreckenden Schaufeln aufweist. Jede Schaufel hat eine Vorderfläche, einen Wurzelbereich zur Nabe hin, einen Spitzenabschnitt, vordere und hintere Kanten, und einen relativ steifen vorderen Abschnitt, der durch einen relativ schmalen Scharnierzone zu einem relativ flexiblen hinteren Abschnitt verbunden ist, wobei die Scharnierzone sich diagonal über die Schaufel von der Hinterkante des Basisabschnitts bis zur Vorderkante des Spitzenteils erstreckt. Ein Paar von Verstärkungsrippen ist an der vorderen Oberfläche des vorderen Schaufelabschnitts angeordnet, die ein Dreieck mit der der Verbindung mit der Nabe als Basis und dem Scheitelpunkt in Richtung auf den Spitzenbereich bilden. Eine Rippe ist zur der Scharnierzone benachbart und im Wesentlichen parallel hierzu, während die andere Rippe beabstandet von und im allgemeinen parallel zu der Vorderkante angeordnet ist. Die Hinterkante jeder Schaufel beinhaltet einen ersten Abschnitt, der sich von der Nabe erstreckt und einen zweiten Abschnitt, der mit dem ersten Abschnitt verbunden ist und sich zu dem Spitzenbereich hin erstreckt und mit dem ersten Abschnitt und dem Spitzenabschnitt einen Winkel bildet und mit der Verbindungsstelle des ersten und des zweiten Hinterkantenabschnitts auf einer Linie liegt, die sich radial von der Achse erstreckt, wenn sich die Schaufel im Hochgeschwindigkeitszustand und reduzierten Steigungszustand befindet. Alle Teile der Schaufel liegen in Richtung der Vorderkante im Wesentlichen vor dieser Linie liegen.

Die US-amerikanische Patentanmeldung US 3 827 826 A offenbart einen Automobil-Kühllüfter mit flexiblen Schaufeln mit einem Verstärkungsteil auf der stromaufwärtigen Seite der Schaufel. Das Verstärkungselement erstreckt sich radial nach innen von der Spitze der Schaufel in einen Abstand im Bereich von 25-50 Prozent der radialen Erstreckung der Schaufel. Die Schaufel ist entlang ihrer Vorderkante kontinuierlich nach hinten gebogenen.

Die europäische Offenlegungsschrift EP 1 681 439 A1 offenbart ein Verbundblatt mit einen Wurzelabschnitt und einen stromlinienförmigen Abschnitt. Der Flügel weist eine Spitz, eine Sehne, eine Vorderkante, eine Hinterkante, eine Sogfläche, die sich von der Vorderkante zur Längskante erstreckt und einer Druckfläche, die sich von der Vorderkante zur Hinterkante erstreckt, auf. Das Verbundblatt weist Verstärkungsfasern in einem Matrixmaterial auf. Der Flügel weist nahe dem Fußabschnitt zumindest an der Vorderkante und Hinterkante Bereiche auf mit einem asymmetrisches Aufliegen der Verstärkungsfasern. Der Flügel weist neben der Spitze wenigstens einen Bereich an der Mittelsehne mit einem asymmetrischen Aufliegen von Verstärkungsfasern auf.

Die deutsche Offenlegungsschrift DE 196 41 099 A1 offenbart ein Laufrad für einen Haartrockner oder ein Haartrockner-Zusatzgerät, das einen Laufradflügel aufweist, durch den das Laufrad von einem Luftstrom in eine Drehung um eine Achse versetzt werden kann. Der Laufradflügel besitzt veränderbare aerodynamische Eigenschaften, insbesondere eine von dem Luftstrom beaufschlagte wirksame Fläche, die in Abhängigkeit von der Drehzahl des Laufradflügels veränderbar ist. Insbesondere ist das freie Ende des Laufradflügels elastisch ausgebildet, so daß es sich durch die Fliehkraft stärker oder schwächer krümmt. Durch diese Veränderung der wirksamen Fläche des Laufradflügels kann die Drehzahl des Laufrads auf einem etwa konstanten Wert gehalten werden.

Im technischen Bereich finden sich viele etablierte Maßnahmen des Standes der Technik, welche im Ergebnis zu einer Schaufel einer Luftbewegungsvorrichtung führen, in welcher die Schaufel über eine Basis mit variabler Geschwindigkeit und Last antreibbar ist und wobei die Schaufel zumindest einen Schaufelbereich aufweist, welcher in Abhängigkeit der Last elastisch deformierbar ausgebildet ist.

Hierbei umfasst der Begriff 'Last' im Sinne der vorliegenden Beschreibung die in Abhängigkeit der Drehzahl auf die Schaufel einwirkenden Kräfte, welche eine Deformation des mindestens einen Schaufelbereichs bewirken können.

Aufgabe der vorliegenden Erfindung ist es eine Schaufel derart weiterzubilden, dass die Schaufel in Abhängigkeit von der Drehzahl einen verbesserten Beitrag zur Erzielung einer gewünschten drehzahlabhängigen Fluidströmung liefert.

Erfindungsgemäß wird diese Aufgabe durch eine Schaufel nach Anspruch 1 gelöst. Vorteilhafte Ausführungsformen der Schaufel ergeben sich aus den Unteransprüchen 2 - 11.

Eine erfindungsgemäße Schaufel für ein Laufrad einer Strömungsmaschine, insbesondere für einen Lüfter, wobei die Schaufel mit einer Nabe des Laufrades in Wirkverbindung stehend mit variabler Geschwindigkeit antreibbar ist und die Schaufel in Abhängigkeit von der Drehzahl des Laufrades elastisch verformbar ausgebildet ist, ist dadurch gekennzeichnet, dass die Schaufel in einem ersten Drehzahlbereich eine erste Schaufelgeometrie und in einem zweiten Drehzahlbereich eine zweite Schaufelgeometrie aufweist, wobei die Schaufel eine drehzahlabhängige vorbestimmte strömungstechnische Gestalt annimmt. Dabei wird als Schaufelgeometrie die Form der Schaufel gesehen.

Die erfindungsgemäße Schaufel weist unterschiedliche Materialien mit unterschiedlichen Elastizitäten auf, wobei durch die Wahl der Materialien und deren Anordnung und Ausgestaltung die drehzahlabhängige vorbestimmte Gestalt der Schaufel eingestellt ist. Elastizität lässt sich durch das Elastizitätsmodul, kurz E-Modul, beschreiben. Das Elastizitätsmodul, auch Zugmodul, Elastizitätskoeffizient, Dehnungsmodul, ist ein Materialkennwert aus der Werkstofftechnik, der den Zusammenhang zwischen Spannung und Dehnung bei der Verformung eines festen Körpers bei linear elastischem Verhalten beschreibt.

Die auf die Schaufel wirkende Fliehkraft ist für die vorbestimmte Schaufelverformung maßgeblich. Die Schaufelverformung bezieht sich auf die strömungstechnische Gestalt. Dabei bezieht sich die strömungstechnische Gestalt vorzugsweise primär auf die Anstellung der Schaufel - d.h. der Winkel, unter dem die Schaufel angestellt ist. Die Schaufel kann zu diesem Zweck verwunden ausgeführt sein, d.h. der Anstellwinkel variiert über die radiale Erstreckung der Schaufel.

Die Schaufelform ist unter Berücksichtigung von in Abhängigkeit von der Drehzahl auf die Schaufel wirkenden Fliehkräften ausgelegt, so dass eine drehzahlabhängige Schaufelverformung resultiert, die eine verbesserte/optimale strömungstechnische Gestalt aufweist. Die strömungstechnisch optimale Gestalt hängt dabei von dem jeweiligen Einsatz und den an diesen Einsatz geknüpften Anforderungen ab.

Eine strömungstechnische Schaufelform bzw. Schaufelgeometrie bezieht sich auf die folgenden Parameter: Anstellwinkel, Schaufelkrümmung (vorwärts, rückwärts, Krümmungsradius, Freiform), Schaufelverwindung.

Eine erfindungsgemäße Schaufel weist einen ersten Schaufelbereich und einen zweiten Schaufelbereich auf. Der erste Schaufelbereich weist einen ersten Werkstoff mit ersten Werkstoffeigenschaften, der zweite Schaufelbereich einen zweiten Werkstoff mit sich von dem ersten Werkstoff unterscheidenden Werkstoffeigenschaften, insbesondere bezüglich der Elastizität, auf.

Dabei wird die drehzahlabhängige Schaufelverformung und damit die vorgestimmte drehzahlabhängige strömungstechnische Gestalt der Schaufeln einzig basierend auf den Werkstoffeigenschaften oder basierend auf einer Kombination von Schaufelbauteilen aus verschiedenen Werkstoffen unterschiedlicher Eigenschaften realisiert.

Aus asymmetrischen Werkstoffeigenschaften resultieren Schaufelformänderungen, die nicht parallel zur Kraftangriffsrichtungen ausgerichtet sind. Bei der Fliehkraft, auch als Zentrifugalkraft bezeichnet, ist die Kraftangriffsrichtung in radialer Richtung ausgerichtet.

Die Werkstoffeigenschaften sind bereichsweise eingestellt.

Dabei ist der erste Schaufelbereich radial außen, zu mindestens einen überwiegenden Bereich einer äußeren Begrenzung der Schaufel bildend, vorgesehen, während der zweite Schaufelbereich radial innen, zu mindestens einen überwiegenden Bereich eines inneren Ansatzbereiches bildend, vorgesehen ist.

In einer vorteilhaften Ausführungsform weist die Schaufel eine konvexe seitliche Begrenzungskante auf, wobei die konvexe Begrenzungskante überwiegend durch den ersten Schaufelbereich gebildet wird.

In einer vorteilhaften Ausführungsform weist die Schaufel eine konkave seitliche Begrenzungskante auf, wobei die konkave Begrenzungskante überwiegend durch den zweiten Schaufelbereich gebildet wird.

In einer vorteilhaften Ausführungsform weist eine der Schaufelbereiche eine Beschichtung zur Begründung der unterschiedlichen Werkstoffeigenschaften auf. Eine weitere vorteilhafte Ausführungsform der Schaufel ist dadurch gekennzeichnet, dass der erste Schaufelbereich eine erste Beschichtung und der zweite Schaufelbereich eine zweite Beschichtung aufweist, wobei die erste Beschichtung eine von der zweiten Beschichtung abweichende Elastizität aufgrund von unterschiedlichen Schichtmaterialien und/oder Schichtdicken aufweist.

Erfindungsgemäß ist die Schaufel eine Hohlschaufel die eine erste Hohlschaufelseite und eine zweite Hohlschaufelseite aufweist, durch die ein Hohlraum eingeschlossen wird, wobei der erste Schaufelbereich überwiegend die erste Hohlschaufelseite bildet und der zweite Schaufelbereich überwiegend die zweite Hohlschaufelfläche bildet.

In einer bevorzugten Ausführungsform einer Hohlschaufel ist vorgesehen, dass die Hohlschaufeln mit inneren Rippen unterschiedlich elastischen Werkstoffen versehen ist.

Eine weitere vorteilhafte Ausführungsform der Schaufel ist dadurch gekennzeichnet, dass mindestens ein dritter Schaufelbereich vorgesehen ist, der eine von dem ersten Schaufelbereich abweichende Werkstoffeigenschaft aufweist, wobei ein Teil der ersten Hohlschaufelseite durch den dritten Schaufelbereich gebildet wird.

Eine weitere vorteilhafte Ausführungsform der Schaufel ist dadurch gekennzeichnet, dass mindestens ein vierter Schaufelbereich vorgesehen ist, der eine von dem zweiten Schaufelbereich abweichende Werkstoffeigenschaft aufweist, wobei ein Teil der zweiten Hohlschaufelseite der Schaufel durch den vierten Schaufelbereich gebildet wird.

Eine weitere vorteilhafte Ausführungsform der Schaufel ist dadurch gekennzeichnet, dass mindestens einer der Schaufelbereich mit einer Faserverstärkung versehen ist, wobei durch die Faserverstärkung die resultierende Werkstoffeigenschaft des Schaufelbereichs verändert wird. Eine Faserverstärkung kann sowohl bei einer einwandigen oder einer zweiwandigen Hohlschaufel vorgesehen sein.

In einer bevorzugten Ausführungsform ist der Einsatz von Compositwerkstoffen bestehend aus bidirektional angeordneten bzw. eingelegten Fasern oder Partikeln mit lokaler Konzentration in eine Werkstoffgrundmatrix zur gezielten Beeinflussung der richtungsabhängigen Verformungsfähigkeit/ E-Modul.

Vorzugweise sind parallel zum Schaufelmeridian verlaufende Gewebemattenabschnitte, Fasern, Drähte oder ähnliches in außermittiger Lage des Schaufelquerschnitts angeordnet.

Eine weitere vorteilhafte Ausführungsform der Schaufel ist dadurch gekennzeichnet, dass die Schaufel eine Vielzahl an Schaufelbereiche in Form von Schaufelsegmenten aufweist, wobei die aneinander angrenzenden Schaufelsegmente unterschiedliche Werkstoffeigenschaften aufweisen. Insbesondere können unterschiedlich elastische Werkstoffe an der Vorder- und Rückseite der Schaufel, z.B. verschiedene Kunststoffe, kubisch-raumzentrierte und kubisch-flächenzentrierte Metalle, unterschiedlich wärmebehandelte und/oder legierte Werkstoffe vorgesehen sein.

Eine weitere vorteilhafte Ausführungsform der Schaufel ist dadurch gekennzeichnet, dass die Schaufel mit mindestens zwei Stegen, die unterschiedliche Wärmeausdehnungskoeffizienten aufweisen, versehen ist.

Eine weitere vorteilhafte Ausführungsform der Schaufel ist dadurch gekennzeichnet, dass die Stege bei Verbindung mit der Nabe tangential zur Nabe angeordnet sind.

Anhand der nachfolgend beschriebenen Ausführungsbeispiele wird die Erfindung näher beschrieben. Die Ausführungsbeispiele sind nur exemplarisch und stellen keine Beschränkung der Erfindung auf die Ausführungsbeispiele dar.
Fig. 1 zeigt eine Ausführungsform einer Schaufel 30 mit zwei aneinander längs angrenzenden Schaufelbereichen 31, 32 mit unterschiedlichen Elastizitäten E_{W1}, E_{W2}.
Fig. 2 zeigt eine Ausführungsform einer Schaufel 30 mit zwei aneinander quer angrenzende Schaufelbereiche 31, 32 mit unterschiedlichen Elastizitäten E_{W1}, E_{W2}.
Fig. 3 zeigt eine weitere Ausführungsform einer Schaufel 30 zwei aneinander quer angrenzende Schaufelbereiche 31, 32 mit unterschiedlichen ausgebildeten Elastizität E_{W1}, E_{W2}.
Fig. 4 zeigt eine Ausführungsform einer Schaufel 30, die eine Vielzahl aneinander rechtwinkelig angrenzender Schaufelbereiche 31, 32, 33, ... mit unterschiedlichen Elastizitäten E_{W1}, E_{W2}, E_{W3}, ... aufweist.
Fig. 5 zeigt eine Ausführungsform einer Schaufel 30, die drei aneinander angrenzender Schaufelbereiche 31, 32, 33 mit unterschiedlichen Elastizitäten aufweist.
Fig. 6 zeigt eine Ausführungsform einer flügelförmigen Schaufel 30 mit Hohlräumen und Faserverstärkungen 55.
Fig. 7 zeigt einen Meridian Schaufelschnitt bei einer aus Vollmaterial 51 bestehenden Schaufel mit einer Faserverstärkung 55.
Figur 8 zeigt eine Hohlschaufel 38 im Schnitt. Die Hohlschaufel ist mit einer Fasern 47 versehen, deren Packungsdichte variiert.
Figur 9 zeigt eine Schaufel im Radialschnitt.
Figur 10 zeigt eine Hohlschaufel, bei der die beiden Schaufelwände in einer unterschiedlichen Stärke zur Bereitstellung einer unterschiedlichen Elastizität E_{W1}, E_{W2} ausgebildet sind.
Figur 11 zeigt eine Hohlschaufel 38, die auf der Innenseite der Hohlschaufel mit Stegen 45 versehen ist.

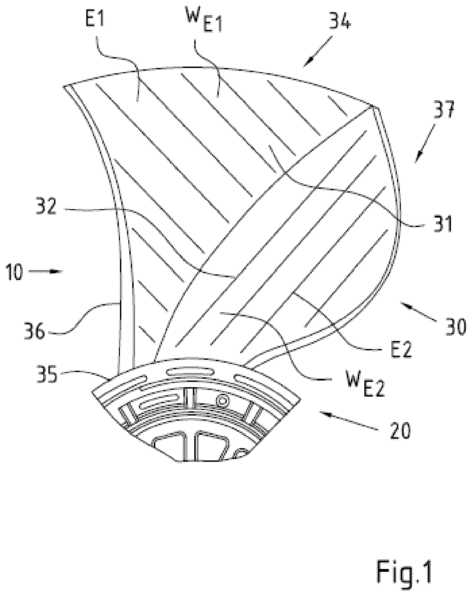

Fig. 1 zeigt eine Ausführungsform einer Schaufel 30, die mit einer Nabe 40 verbunden ist. Durch die Nabe 40 mit mehreren Schaufeln, nicht gezeigt, wird ein Laufrad eines Lüfters 10 gebildet. Die Schaufel 30 ist mit zwei aneinander längs angrenzenden Schaufelbereichen 31, 32 mit unterschiedlichen Elastizitäten E_{W1}, E_{W2} ausgebildet. Die Schaufel 30 weist eine erste seitliche Begrenzungskante 36, die hier eine konvexe Form aufweist, auf und eine zweite seitliche Begrenzungskante 37, die hier eine konkave Form aufweist, auf. Die beiden Begrenzungskanten 36,37 könnten auch andere Formgestaltungen abhängig vom jeweiligen Einsatz, aufweisen. Eine äußere Begrenzung 34 der Schaufel liegt gegenüber einem inneren Ansatz 35. Am inneren Ansatz 35 ist die Schaufel mit der Nabe 20 verbunden.

Die beiden Schaufelbereiche 31, 32 stoßen an einer Grenzlinie aneinander. Dabei fällt die Grenzlinie zwischen den beiden Schaufelbereichen nicht mit der radialen Richtung des Laufrades 20, auch als Schaufelrad bezeichnet, zusammen. Eine Last wird eine asymmetrische, elastische Deformation der beiden Bereiche 31, 32 bewirken. Die asymmetrische Deformation wird durch die unterschiedlichen Elastizitäten W_{E1}, W_{E2} der beiden Schaufelbereiche bewirkt. Die unterschiedlichen Elastizitäten können insbesondere durch die Verwendung von unterschiedlichen Materialien E1 und E2 für die beiden Schaufelbereiche bereitgestellt werden. Die Werkstoffeigenschaft des ersten Materials wird mit W1 und die Werkstoffeigenschaft des zweiten Materials ist mit W2 bezeichnet. Hier ist die Elastizität, insbesondere auch der gewählten Materialien, von großer Bedeutung. Die Elastizität kann durch ein E-Modul des jeweiligen Materials wiedergeben sein. Die Deformation ist drehzahlabhängig. Durch die gezielte bereichsweise Deformation der Schaufel 30 wird das Fördervolumen in Abhängigkeit von der Drehzahl optimiert.

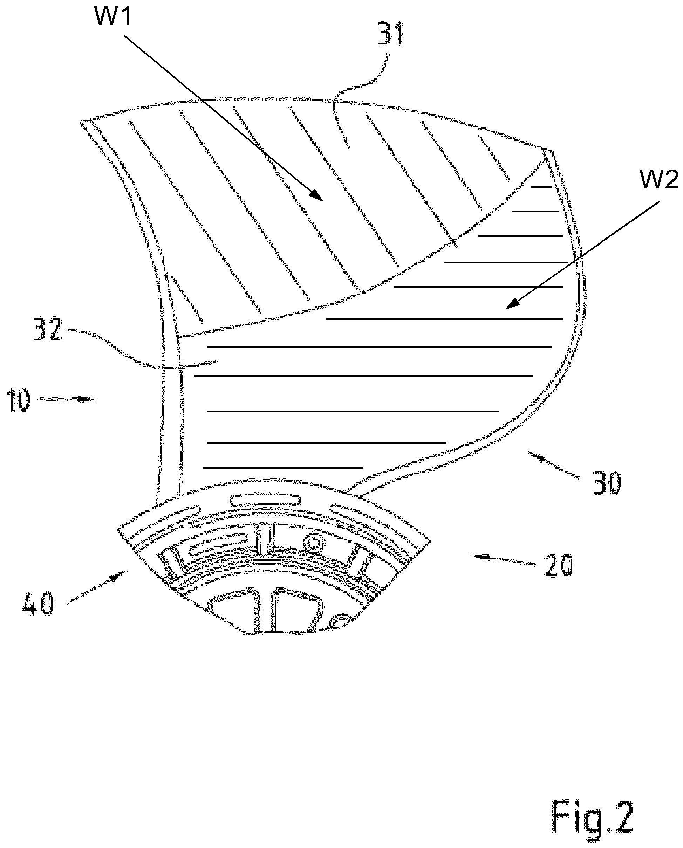

Fig. 2 zeigt eine Ausführungsform einer Luftbewegungsvorrichtung 10 mit einer antreibbaren Nabe 40, an welcher Schaufeln 30, nur eine gezeigt, befestigt sind. Die gezeigte Schaufel 30 weist zwei aneinander quer angrenzende Schaufelbereiche 31, 32 mit unterschiedlichen Elastizitäten E_{W1}, E_{W2} auf. Der konkav ausgebildete Bereich der Schaufel 30 mit der seitlichen konkaven Begrenzungskante 37 und der Bereich nahe zum inneren Ansatzbereich 35 weist eine einheitliche Elastizität E_{W2} auf. Die Grenzlinie der beiden Schaufelbereiche 31, 32 verläuft von der ersten konvexen seitlichen Begrenzungskante nach radial außen. Es kann die gesamte äußere Begrenzung 34 durch den ersten Schaufelbereich 31 gebildet sein, wobei die gesamte, oder nahezu die gesamte zweite Begrenzungskante 37 durch den zweiten Schaufelbereich 32 gebildet wird. Es können deformierende Spannungen entlang des Übergangsbereichs in Abhängigkeit von gewählten Drehzahlbereichen/Betriebszuständen gezielt für eine gewünschte Deformation genutzt werden.

Der erste Schaufelbereich 31 im äußeren Bereich ist im Bereich höherer Geschwindigkeit und Drucklast angeordnet, während der zweite Schaufelbereich im inneren Bereich nahe zur Innerer Ansatzbereich 35 angeordnet ist. Durch die im Wesentlichen horizontale, kontinuierlich gebogene Anordnung des Übergangsbereiches, der um die Grenzlinie gebildet ist, wird im Wesentlichen der Anstellwinkel der äußeren Schaufelspitze je nach Betriebszustand gezielt vergrößert oder verkleinert, um optimale Wirkungsgrade sicherzustellen.

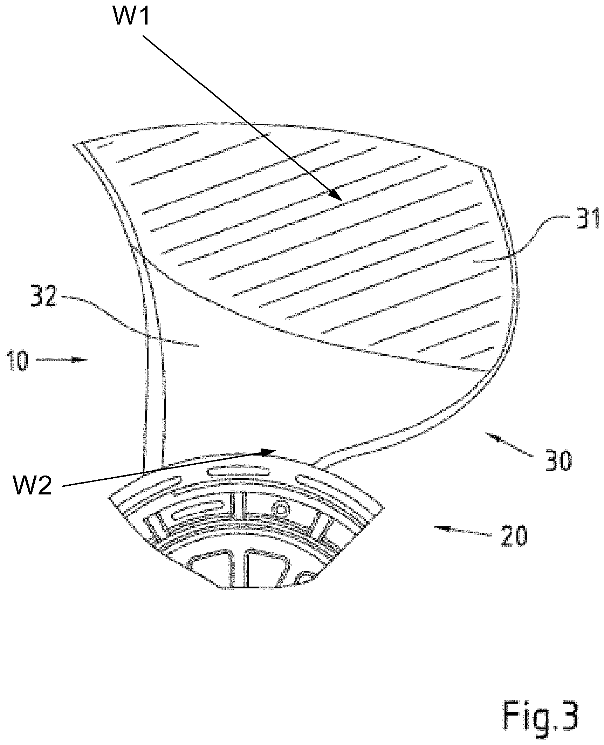

In Fig. 3 ist eine weitere Ausführungsform einer Luftbewegungsvorrichtung 10 gezeigt. Die Luftbewegungsvorrichtung 10 mit einer antreibbaren Nabe 40 weist mindestens eine Schaufel 30 auf, wobei die Schaufel 30 zwei aneinander quer angrenzende Schaufelbereiche 31, 32 mit unterschiedlichen resultierenden Elastizität aufweist. Der erste Schaufelbereich 31 ist im äußeren Bereich höherer Geschwindigkeit und Drucklast angeordnet, während der zweite Schaufelbereich im inneren Bereich nahe zum innerer Ansatzbereich 35 angeordnet ist.

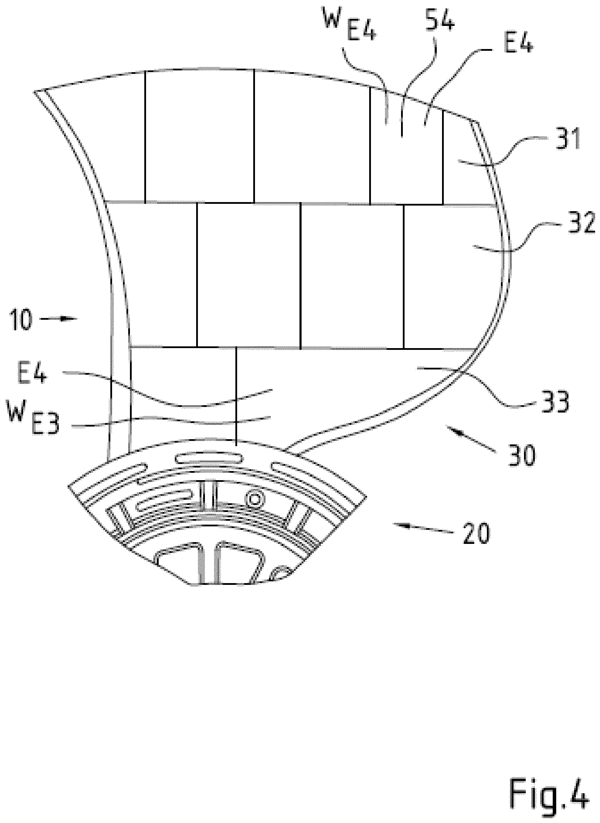

Fig. 4 zeigt eine Ausführungsform einer Schaufel 30, die mit einer antreibbaren Nabe 40 verbunden ist. Die gezeigte Schaufel 30 weist eine Vielzahl aneinander rechtwinkelig angrenzender Schaufelbereiche 31, 32, 33, 54... mit unterschiedlichen Elastizitäten auf. Dabei sind die Flächen der einzelnen Schaufelbereiche 31, 32, 33,.. klein gegenüber der Gesamtfläche der Schaufel 30 gehalten. Die Grenze zwischen den Schaufelbereichen kann auch geschwungen ausgebildet sein. Die Schaufelbereiche sind an den Grenzflächen der jeweils benachbarten Schaufelbereiche 31, 32, 33, 54 miteinander verbunden. Durch die Vielzahl an Schaufelbereichen können lokal eine Elastizität realisiert werden. Vorzugsweise sind die angrenzenden Schaufelbereiche an den Grenzflächen der jeweils benachbarten Schaufelbereiche 31, 32, 33, 54 kraft- und stoffschlüssig ineinander übergehend gekoppelt. Durch die mosaikartig zusammengesetzte Struktur der Vielzahl an Schaufelbereichen 31, 32, 33, 54 werden - bevorzugt über Flächenaufteilungen mit flächenfüllenden Geometrien, besonders bevorzugt ergänzt mit Bereichen analog zu Penrose-Parkettierungen - für mehrere, unterschiedliche Betriebszustände gezielt Deformationsbereiche vorgegeben, um über weite Drehzahlbereiche / mehrere Betriebszustände hinweg eine sich stets optimal elastisch anpassende Schaufelgeometrie der Schaufel 30 sicherzustellen.

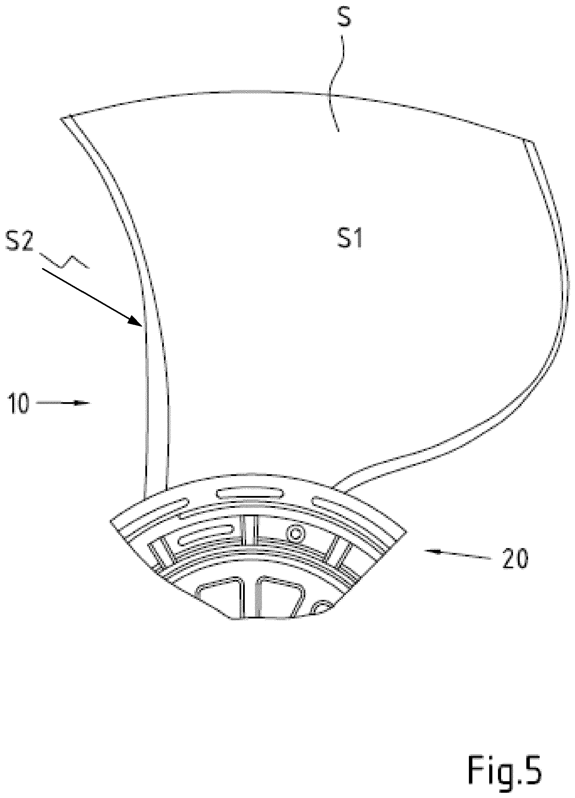

Fig. 5 zeigt eine Ausführungsform einer Schaufel 30, die mit einer antreibbaren Nabe 40 verbunden ist. Die gezeigte Schaufel 30 weist Beschichtungen S auf. Eine Teilfläche der Schaufel ist mit einer ersten Beschichtung S1 und eine weitere Teilfläche ist mit einer zweiten Beschichtung S2 versehen. Durch die unterschiedlichen Beschichtungen S1 und S2 wird eine bereichsweise unterschiedliche resultierende Elastizität der Schaufel erzeugt.

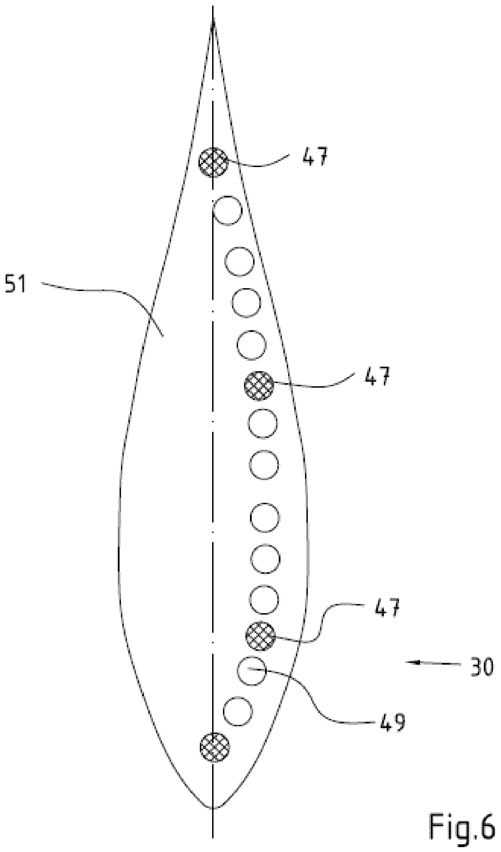

Fig. 6 zeigt eine vorteilhafte Ausführungsform einer flügelförmigen Schaufel 30 mit einstückigem Grundkörper im Schnitt. Die Schaufel besteht aus einem Vollmaterial 51, wobei auf einer Seite des Flügels 30 parallel zur Längsrichtung ausgerichteten Hohlräumen 49 ausgebildet sind und weiterhin parallel zu diesen Hohlräumen 49 Fasern 47 in dem Vollmaterial eingeschlossen sind. Durch die eingebetteten Fasern wird die Elastizität einseitig verringert und durch die ausgebildeten Hohlräume wird die Elastizität einseitig erhöht.

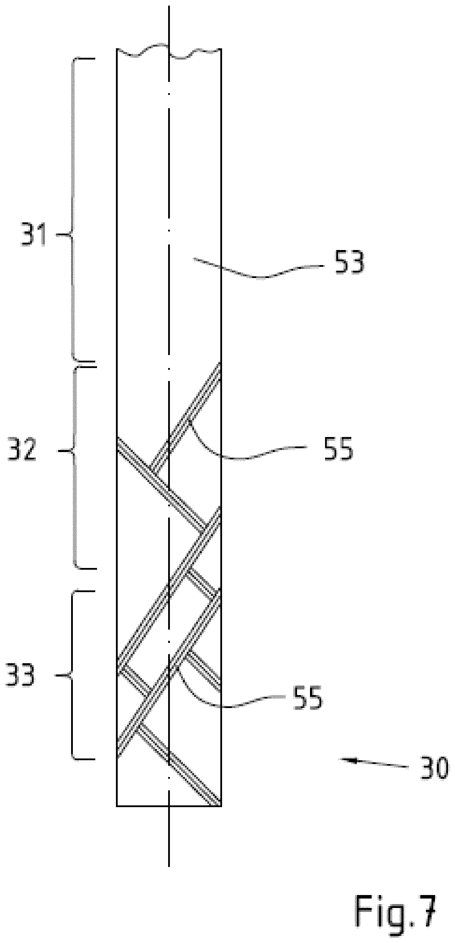

In einer vorteilhaften Ausführungsform gemäß Fig. 7 ist im Schnitt gezeigt. Dabei kann es sich um einen Schnitt in radialer Richtung, auch als Längsrichtung bezeichnet oder auch ein Querschnitt sein. Die Schaufel 30 besteht aus einem elastischen Basismaterial 53. In dem Basismaterial ist eine Faserverstärkung eingebettet. Diese Faserverstärkung 55 ist unterschiedlich stark oder häufig in unterschiedlichen Schaufelbereichen 31, 32, 33 ausgebildet. Durch die Faserverstärkung werden Schaufelbereiche mit unterschiedlichen Elastizitäten W_{E1}, W_{E2}, W_{E3} bereitgestellt.

Ein kontinuierlich ausgebildeter Gradient zwischen verschieden Schaufelbereichen kann durch eine Faserverstärkung bereitgestellt werden. Durch diese Elastizitätsbereiche können gleichmäßige, flächige Deformationsspannungen induziert werden, was besonders bei elastischen, weichen Materialien eine gleichmäßige, weit reichende Deformation des gesamten Körpers einer Schaufel 30 in Abhängigkeit der Drehzahl bereitstellt.

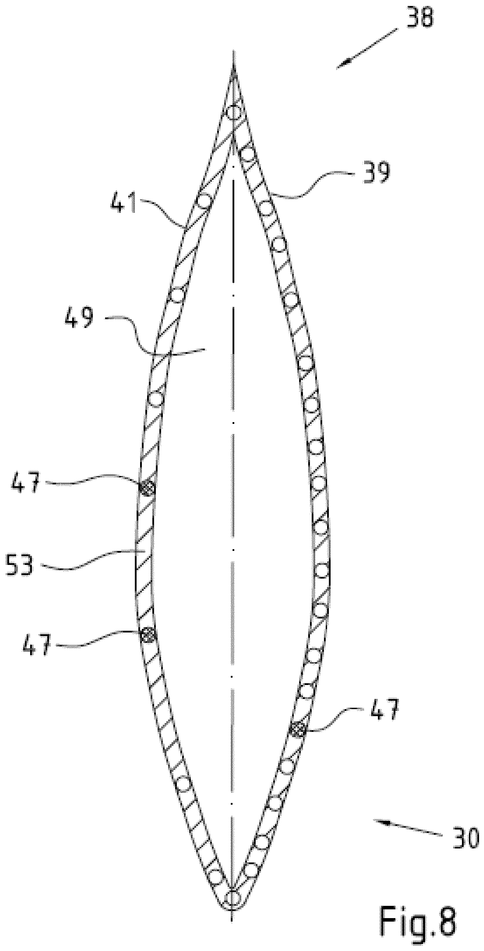

Fig. 8 zeigt eine weitere vorteilhafte Ausführungsform einer Hohlschaufel 38. Die Schaufel 38 weist einen Hohlraum 49 auf. Der Hohlraum ist auf der einen Seite durch eine erste Schaufelseite und auf der anderen Seite durch eine zweite Schaufelseite 41 begrenzt. Die beiden Schaufelseiten 39, 41 der Schaufel bestehen aus einem elastischen Basismaterial 53. In das Basismaterial sind Fasern 47 eingebettet. Durch die Dichte der Fasereinbettung kann gezielt eine gewünschte Elastizität bereitgestellt werden.

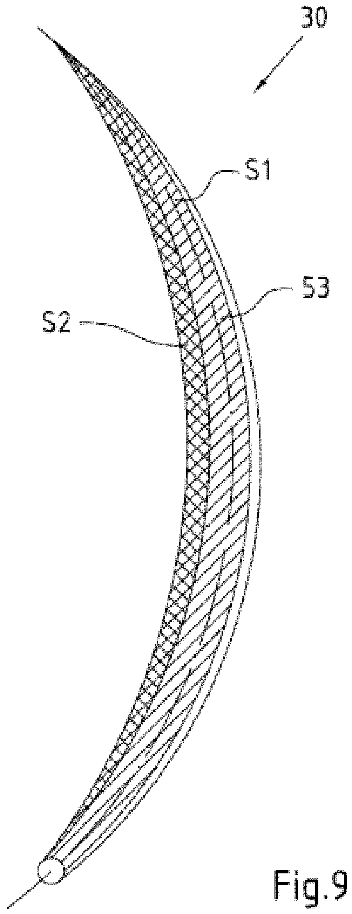

In Fig. 9 ist ein Schnitt durch eine Schaufel 30 gezeigt. Die Schaufel 30 besteht aus einem elastischen Basismaterial das auf der einen Seite mit einer Beschichtung S1 und auf der anderen Seite mit einer Beschichtung S2 versehen ist. In diesem Schnitt ist gut die Wölbung der Schaufel zu erkennen.

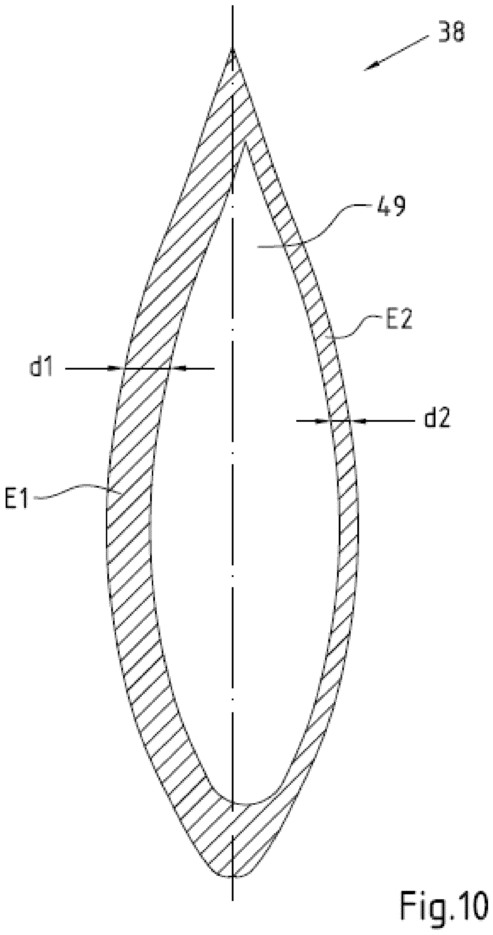

In Figur 10 ist eine Hohlschaufel 38 mit einem Hohlraum 49 im Schnitt gezeigt. Bei dieser Hohlschaufel sind die beiden Seiten in unterschiedlichen Dicken d1 und d2 ausgebildet. In der dargestellten besonders bevorzugten Ausführung bestehen die beiden Seitenwände 39, 41 aus einem unterschiedlichen Werkstoff E1 und E2.

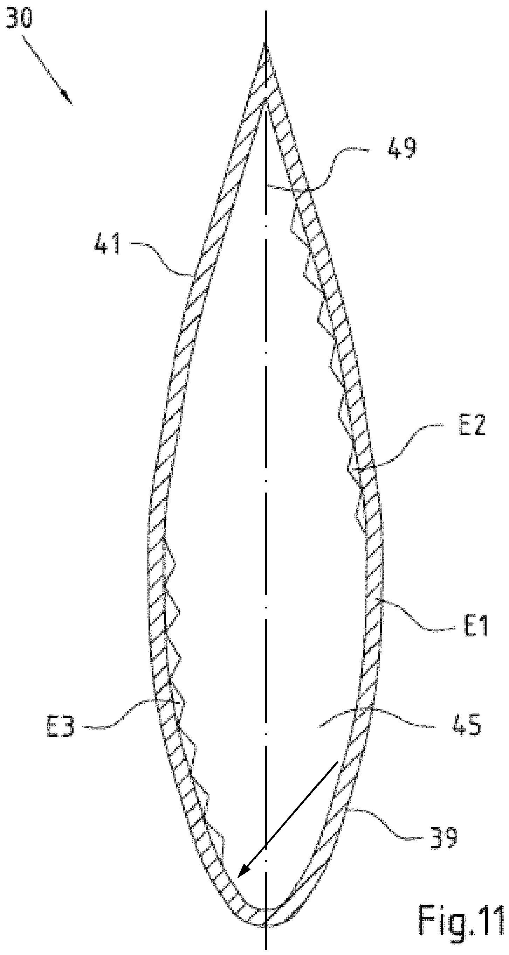

In Figur 11 ist eine weitere Ausgestaltung einer Hohlschaufel 38 im Schnitt gezeigt. Die Hohlschaufel 38 weist eine erste Hohlschaufelseite 39 und eine zweite Hohlschaufelseite 41 auf. Auf der dem Hohlraum 49 zugewandten Seite weist die erste Hohlschaufelseite 39 Stege aus einem zweiten Werkstoff E2 auf. Auf der dem Hohlraum 49 zugewandten Seite weist die zweite Hohlschaufelseite 41 Stege aus einem dritten Werkstoff E3 auf. Dabei ist der dritte und zweite Werkstoff vorzugsweise von dem ersten Werkstoff verschieden. Der zweite und der dritte Werkstoff können identische oder verschiedene Werkstoffe sein. Sind die innenliegenden ausgebildeten Stege aus dem gleichen Material wie die Schaufel, so sind die Stege Versteifungsrippen. In dem dargestellten Ausführungsbeispiel sind auf der einen Seite die Stege an dem Anströmungsseiten Ende der Schaufelseitenwand angeordnet, wobei bei der anderen Hohlschaufelseite die Stege an dem abströmseitigen Ende der Hohlschaufel angeordnet sind.

Nicht dargestellt, können die Schaufel zusätzlich mit innerhalb der Schaufeln angeordneten, druckbeaufschlagbaren elastischen Kammern versehen sein.

**Bezugszeichenliste:**

| | | | |
|---|---|---|---|
| 10 | Luftbewegungsvorrichtung | 53 | elastisches Basismaterial |
| 20 | Laufrad | 54 | vierter Schaufelbereich |
| 30 | Schaufel | 55 | Faserverstärkung |
| 31 | erster Schaufelbereich | E1 | erster Werkstoff |
| 32 | zweiter Schaufelbereich | W1 | erste Werkstoffeigenschaften |
| 33 | dritter Schaufelbereich | W_{E1} | Elastizität von E1 |
| 34 | äußere Begrenzung | E2 | zweite Werkstoff |
| 35 | innerer Ansatzbereich | W2 | zweite Werkstoffeigenschaften |
| 36 | Konvexe seitliche Begrenzungskante | | |
| | | W_{E2} | Elastizität von E2 |
| 37 | konkave seitliche Begrenzungskante | E3 | dritter Werkstoff |
| | | W3 | dritte Werkstoffeigenschaften |
| 38 | Hohlschaufel | W_{E3} | Elastizität von E3 |
| 39 | erste Hohlschaufelseite | E4 | vierter Werkstoff |
| 40 | Nabe | W4 | vierte Werkstoffeigenschaften |
| 41 | zweite Hohlschaufelseite | | |
| 45 | Steg | W_{E4} | Elastizität von E4 |
| 47 | Faser | S | Beschichtung |
| 49 | Hohlraum | S1 | erste Beschichtung |
| 51 | Vollmaterial | S2 | zweite Beschichtung |

## Patentansprüche

1. Schaufel (30) für ein Laufrad (20) einer fremdangetriebenen Strömungsmaschine, insbesondere für einen Lüfter, wobei die Schaufel mit einer Nabe (40) des Laufrades (20) in Wirkverbindung stehend mit variabler Geschwindigkeit antreibbar ist und die Schaufel (30) in Abhängigkeit von der Drehzahl des Laufrades (20) elastisch verformbar ausgebildet ist, wobei die Schaufel (30) in einem ersten Drehzahlbereich eine erste Schaufelgeometrie und in einem zweiten Drehzahlbereich eine zweite Schaufel-geometrie aufweist, wobei die Schaufel (30) eine drehzahlabhängige vorbestimmte strömungstechnische Gestalt annimmt, wobei die Schaufel (30) einen ersten Schaufelbereich (31) und einen zweiten Schaufelbereich (32) aufweist und der erste Schaufelbereich einen ersten Werkstoff (E1) mit ersten Werkstoffeigenschaften (W1) aufweist, und der zweite Schaufelbereich einen zweiten Werkstoff (E2) mit sich von dem ersten Werkstoff (E1) unterscheidenden Werkstoffeigenschaften (W2), insbesondere bezüglich der Elastizität, aufweist und wobei der erste Schaufelbereich (E1) radial außen, zu mindestens einen überwiegenden Bereich einer äußeren Begrenzung (34) der Schaufel (30) bildend, der zweite Schaufelbereich (32) radial innen, zu mindestens einen überwiegenden Bereich eines inneren Ansatzbereiches (35) bildend, vorgesehen ist,
**dadurch gekennzeichnet,**
**dass** die Schaufel (30) eine Hohlschaufel (38) ist, die eine erste Hohlschaufelseite (39) und eine zweite Hohlschaufelseite (41) aufweist, durch die ein Hohlraum (49) eingeschlossen wird, wobei der erste Schaufelbereich (31) überwiegend die erste Hohlschaufelseite (39) bildet und der zweite Schaufelbereich (32) überwiegend die zweite Hohlschaufelseite (41) bildet.

2. Schaufel (30) nach Anspruch 1,
**dadurch gekennzeichnet,**
**dass** die Schaufel (30) eine konvexe seitliche Begrenzungskante (36) aufweist und die konvexe Begrenzungskante (36) überwiegend durch den ersten Schaufelbereich (31) gebildet wird.

3. Schaufel (30) nach einem der vorhergehenden Ansprüche,
**dadurch gekennzeichnet,**
**dass** die Schaufel (30) eine konkave seitliche Begrenzungskante (37) aufweist und die konkave Begrenzungskante (37) überwiegend durch den zweiten Schaufelbereich (32) gebildet wird.

4. Schaufel (30) nach einem der vorhergehenden Ansprüche,
**dadurch gekennzeichnet,**
**dass** eine der Schaufelbereiche (31, 32) eine Beschichtung (S) zur Begründung der unterschiedlichen Werkstoffeigenschaften (W1, W2) aufweist.

5. Schaufel (30) nach einem der vorhergehenden Ansprüche,
**dadurch gekennzeichnet,**
**dass** der erste Schaufelbereich (31) eine erste Beschichtung (S1) und der zweite Schaufelbereich (32) eine zweite Beschichtung (S2) aufweist, wobei die erste Beschichtung (S1) eine von der zweiten Beschichtung (S2) abweichende Elastizität aufgrund von unterschiedlichen Schichtmaterialien und/oder Schichtdicken aufweist.

6. Schaufel (30) nach einem der vorherigen Ansprüche,
**dadurch gekennzeichnet,**
**dass** mindestens ein dritter Schaufelbereich (33) vorgesehen ist, der eine von dem ersten Schaufelbereich abweichende Werkstoffeigenschaft (W3) aufweist, wobei ein Teil der ersten Hohlschaufelseite (39) durch den Dritten Schaufelbereich (33) gebildet wird.

7. Schaufel (30) nach einem der vorherigen Ansprüche,
**dadurch gekennzeichnet,**
**dass** mindestens ein vierter Schaufelbereich (54) vorgesehen ist, der eine von dem zweiten Schaufelbereich (32) abweichende Werkstoffeigenschaft (WE4) aufweist, wobei ein Teil der zweiten Hohlschaufelseite (41) der Schaufel (30) durch den vierten Schaufelbereich (54) gebildet wird.

8. Schaufel (30) nach einem der vorhergehenden Ansprüche,
**dadurch gekennzeichnet,**
**dass** mindestens einer der Schaufelbereich (31, 32, 33, 54) mit einer Faserverstärkung (53) versehen ist, wobei durch die Faserverstärkung (53) die resultierende Werkstoffeigenschaft des Schaufelbereichs verändert wird.

9. Schaufel (30) nach einem der vorhergehenden Ansprüche,
**dadurch gekennzeichnet,**
**dass** die Schaufel (30) eine Vielzahl an Schaufelbereiche (31, 32, 33, 54) in Form von Schaufelsegmenten aufweist, wobei die aneinander angrenzenden Schaufelsegmente unterschiedliche Werkstoffeigenschaften(W1, W2, W3) aufweisen.

10. Schaufel (30) nach einem der vorhergehenden Ansprüche,
**dadurch gekennzeichnet,**
**dass** die Schaufel (30) mit mindestens zwei Stegen (45), die unterschiedliche Wärmeausdehnungskoeffizienten aufweisen, versehen ist.

11. Schaufel (30) nach Anspruch 10,
**dadurch gekennzeichnet,**
**dass** die Stege (45) bei Verbindung der Schaufel (30) mit der Nabe (40) tangential zur Nabe (40) angeordnet sind.

## Claims

1. Blade (30) for an impeller (20) of an externally driven turbo-machine, in particular for a fan, wherein the blade, operatively connected to a hub (40) of the impeller (20), can be driven with variable speed and the blade (30) is configured to be resiliently deformable in dependence on the rotational speed of the impeller (20), wherein the blade (30) has in a first rotational speed range a first blade geometry and in a second rotational speed range a second blade geometry, wherein the blade (30) assumes a predetermined fluidic form that is dependent on the rotational speed, wherein the blade (30) comprises a first blade region (31) and a second blade region (32), and the first blade region comprises a first material (E1) with first material properties (W1) and the second blade region comprises a second material (E2) with material properties (W2) differing from those of the first material (E1), in particular as regards resilience, and wherein the first blade region (E1) is provided radially outwards, forming at least a predominant region of an outer limit (34) of the blade (30), and the second blade region (32) is provided radially inwards, forming at least a predominant region of an inner shoulder region (35),
**characterised in that**
the blade (30) is a hollow blade (38) which has a first hollow blade side (39) and a second hollow blade side (41) by which a cavity (49) is enclosed, wherein the first blade region (31) forms predominantly the first hollow blade side (39) and the second blade region (32) forms predominantly the second hollow blade side (41).

2. Blade (30) according to claim 1,
**characterised in that**
the blade (30) comprises a convex lateral delimiting edge (36), and the convex delimiting edge (36) is formed predominantly by the first blade region (31).

3. Blade (30) according to any one of the preceding claims,
**characterised in that**
the blade (30) comprises a concave lateral delimiting edge (37), and the concave delimiting edge (37) is formed predominantly by the second blade region (32).

4. Blade (30) according to any one of the preceding claims,
**characterised in that**
one of the blade regions (31, 32) comprises a coating (S) for establishing the different material properties (W1, W2).

5. Blade (30) according to any one of the preceding claims,
**characterised in that**
the first blade region (31) comprises a first coating (S1) and the second blade region (32) comprises a second coating (S2), wherein the first coating (S1) has a different resilience from that of the second coating (S2) as a result of different layer materials and/or layer thicknesses.

6. Blade (30) according to any one of the preceding claims,
**characterised in that**
at least a third blade region (33) is provided which has a material property (W3) differing from that of the first blade region, wherein a portion of the first hollow blade side (39) is formed by the third blade region (33).

7. Blade (30) according to any one of the preceding claims,
**characterised in that**
at least a fourth blade region (54) is provided which has a material property (WE4) differing from that of the second blade region (32), wherein a portion of the second blade hollow side (41) of the blade (30) is formed by the fourth blade region (54).

8. Blade (30) according to any one of the preceding claims,
**characterised in that**
at least one of the blade regions (31, 32, 33, 54) is provided with a fibre reinforcement (53), wherein the resulting material property of the blade region is changed by the fibre reinforcement (53).

9. Blade (30) according to any one of the preceding claims,
**characterised in that**
the blade (30) comprises a plurality of blade regions (31, 32, 33, 54) in the form of blade segments, wherein the blade segments adjacent to one another have different material properties (W1, W2, W3).

10. Blade (30) according to any one of the preceding claims,
**characterised in that**
the blade (30) is provided with at least two webs (45) which have different thermal expansion coefficients.

11. Blade (30) according to claim 10,
**characterised in that**
the webs (45) are arranged tangentially to the hub (40) on connection of the blade (30) to the hub (40).

## Revendications

1. Aube (30) pour une roue mobile (20) d'une turbomachine entraînée de l'extérieur, en particulier pour un ventilateur, dans laquelle l'aube peut être entraînée à une vitesse variable en coopération avec un moyeu (40) de la roue mobile (20) et l'aube (30) est réalisée de manière élastiquement déformable en fonction de la vitesse de rotation de la roue mobile (20), dans laquelle l'aube (30) présente dans une première plage de vitesses de rotation une première géométrie d'aube et dans une deuxième plage de vitesses de rotation une deuxième géométrie d'aube, dans laquelle l'aube (30) adopte une forme propre à la technique des fluides prédéfinie en fonction de la vitesse de rotation, dans laquelle l'aube (30) présente une première zone d'aube (31) et une deuxième zone d'aube (32) et la première zone d'aube présente un premier matériau (E1) avec des premières propriétés de matériau (W1) et la deuxième zone d'aube présente un deuxième matériau (E2) avec des propriétés de matériau (W2) se distinguant du premier matériau (E1), en particulier en matière d'élasticité, et dans laquelle la première zone d'aube (E1) est prévue radialement côté extérieur tout en formant au moins une zone majoritaire d'une délimitation extérieure (34) de l'aube (30), la deuxième zone d'aube (32) est prévue radialement côté intérieur tout en formant au moins une zone majoritaire d'une zone d'attache intérieure (35),
**caractérisée en ce que**
l'aube (30) présente une aube creuse (38), qui présente un premier côté d'aube creuse (39) et un second côté d'aube creuse (41), par laquelle un espace creux (49) est enfermé, dans laquelle la première zone d'aube (31) forme majoritairement le premier côté d'aube creuse (39) et la deuxième zone d'aube (32) forme majoritairement le deuxième côté d'aube creuse (41).

2. Aube (30) selon la revendication 1,
**caractérisée en ce que**
l' aube (30) présente une arête de délimitation latérale convexe (36) et l'arête de délimitation convexe (36) est formée majoritairement par la première zone d'aube (31).

3. Aube (30) selon l'une quelconque des revendications précédentes,
**caractérisée en ce que**
l'aube (30) présente une arête de délimitation (37) concave latérale et l'arête de délimitation concave (37) est formée majoritairement par la deuxième zone d'aube (32).

4. Aube (30) selon l'une quelconque des revendications précédentes,
**caractérisée en ce**
**qu'**une des zones d'aube (31, 32) présente un revêtement (S) servant à justifier les différentes propriétés de matériaux (W1 ,W2).

5. Aube (30) selon l'une quelconque des revendications précédentes,
**caractérisée en ce que**
la première zone d'aube (31) présente un premier revêtement (S1) et la deuxième zone d'aube (32) présente un deuxième revêtement (S2), dans lequel le premier revêtement (S1) présente une élasticité divergeant du deuxième revêtement (S2) du fait des différents matériaux de couche et/ou épaisseurs de couche.

6. Aube (30) selon l'une quelconque des revendications précédentes,
**caractérisée en ce**
**qu'**est prévue au moins une troisième zone d'aube (33), qui présente une propriété de matériau (W3) divergeant de la première zone d'aube, dans laquelle une partie du premier côté d'aube creuse (39) est formée par la troisième zone d'aube (33).

7. Aube (30) selon l'une quelconque des revendications précédentes,
**caractérisée en ce**
**qu'**est prévue au moins une quatrième zone d'aube (54), qui présente une propriété de matériau (WE4) divergeant de la deuxième zone d'aube (32), dans laquelle une partie du deuxième côté d'aube creuse (41) de l'aube (30) est formée par la quatrième zone d'aube (54).

8. Aube (30) selon l'une quelconque des revendications précédentes,
**caractérisée en ce**
**qu'**au moins une des zones d'aube (31, 32, 33, 54) est pourvue d'un renforcement par des fibres (53), dans laquelle la propriété de matériau en résultant de la zone d'aube est modifiée par le renforcement par des fibres (53).

9. Aube (30) selon l'une quelconque des revendications précédentes,
**caractérisée en ce que**
l'aube (30) présente une multitude de zones d'aube (31, 32, 33, 54) sous la forme de segments d'aube, dans laquelle les segments d'aube se jouxtant les uns les autres, dans laquelle les segments d'aube se jouxtant les uns les autres présentent différentes propriétés de matériau (W1, W2, W3).

10. Aube (30) selon l'une quelconque des revendications précédentes,
**caractérisée en ce que**
l'aube (30) est pourvue d'au moins deux entretoises (45), qui présentent différents coefficients de dilatation thermique.

11. Aube (30) selon la revendication 10,
**caractérisée en ce que**
les entretoises (45) sont disposées de manière tangentielle par rapport au moyeu (40) lorsque l'aube (30) est reliée au moyeu (40).
